# EUROPEAN PATENT SPECIFICATION

(11) **EP 3 342 775 B1**
(45) Date of publication and mention of the grant of the patent: **25.11.2020**
(21) Application number: 16839161.3
(22) Date of filing: 17.08.2016
(51) Int. Cl.: C07F 7/18, C08F 30/08, C08F 292/00

(54) **ORGANOSILICON COMPOUND, POLYMER COMPOUND, INORGANIC MATERIAL AND RESIN COMPOSITION**
ORGANOSILICIUMVERBINDUNG, POLYMERVERBINDUNG, ANORGANISCHES MATERIAL UND HARZZUSAMMENSETZUNG
COMPOSÉ D'ORGANOSILICIUM, COMPOSÉ POLYMÈRE, MATÉRIAU INORGANIQUE ET COMPOSITION DE RÉSINE

(30) Priority: 27.08.2015 JP 2015167338
(43) Date of publication of application: 04.07.2018
(73) Proprietor: Kuraray Co., Ltd., Okayama 710-0801 (JP)
(72) Inventor: SATO, Junko, Tainai-shi Niigata 959-2691 (JP); TSURUTA, Takuo, Tainai-shi Niigata 959-2691 (JP)
(74) Representative: Müller-Boré & Partner Patentanwälte PartG mbB
(86) International application number: PCT/JP2016/074029
(87) International publication number: WO 2017/033814

(56) References cited:
- GB-A- 1 096 898
- JP-A- H07 267 842
- JP-A- 2000 159 780
- US-A- 3 258 477
- US-A- 3 453 230
- US-A1- 2003 065 177

## Description

The present invention relates to a novel organosilicon compound, a polymer compound, an inorganic material, and a resin composition. In more detail, the present invention relates to an organosilicon compound having an alkyl group at the β-position of a silyl group, a polymer compound having a structural unit derived from the foregoing organosilicon compound, an inorganic material having been subjected to a surface treatment with the foregoing organosilicon compound, and a resin composition containing the aforementioned inorganic material.

A silane coupling agent is widely used for the purpose of improving adhesiveness between a resin and an inorganic material.

The silane coupling agent is typically a compound in which a hydrolyzable group, such as a methoxy group, an ethoxy group, etc., and an organic functional group, such as an amino group, an epoxy group, etc., are bound with a silicon atom, and examples thereof include vinyltrimethoxysilane, vinyltriethoxysilane, γ-glycidoxypropyltrimethoxysilane, γ-methacryloxypropyltrimethoxysilane, γ-acryloxypropyltrimethoxysilane, γ-aminopropyltrimethoxysilane, γ-mercaptopropyltrimethoxysilane, γ-ureidopropyltrimethoxysilane, bis(triethoxysilylpropyl)tetrasulfide, γ-isocyanatopropyltrimethoxysilane, tris(trimethoxysilylpropyl)isocyanurate, and the like.

As a typical use method, there is exemplified a method in which an inorganic filling material is subjected to a surface treatment with the silane coupling agent in advance and then added to a resin. In this case, the hydrolyzable group of the silane coupling agent is hydrolyzed with moisture in a solution or air, adsorbed moisture on the surface of an inorganic material (hereinafter referred to as "inorganic material surface"), or the like and converted to a hydroxy group, and an oligomer is formed by intermolecular dehydration condensation. The excessive hydroxy group of the oligomer forms a hydrogen bond together with the hydroxy group on the inorganic material surface, and the oligomer is bound with the inorganic material. Thereafter, dehydration/condensation is generated by a heat drying treatment or the like, whereby an inorganic material in which the silane coupling agent oligomer is firmly chemically bound on the surface thereof is obtained. When the thus surfaced-treated inorganic material is combined with the resin, the inorganic material and the resin are firmly closely adhered to each other.

As other use method, there is exemplified a method in which the resin and the coupling agent are complexed in advance and then bound with the inorganic material. For example, there is exemplified a method in which a silane coupling agent having a carbon-carbon double bond is copolymerized with methyl methacrylate or the like, and the resulting resin is bound with an inorganic material. According to such a method, for example, it becomes possible to achieve firm coating onto the inorganic material surface.

However, under a high-temperature high-humidity use condition and under an acidic or basic use condition, the matter that the inorganic material and the resin are separated from each other due to hydrolysis of the silane coupling agent layer is regarded as a problem, and a silane coupling agent having excellent hydrolysis resistance is proposed. Examples thereof include a long-chain spacer type silane coupling agent (see PTL 1), a perfluoroalkylene group-containing silane coupling agent (see PTL 2), and the like.

GB 1,096,898 A describes modified acrylic polymers which are moldable before cure, are curable at room temperature, and which cure to elastomers.

PTL 1: JP 64-50887 A
PTL 2: JP 2000-248114 A

However, according to investigations made by the present inventors, in the case of using the linear alkyl long-chain spacer type silane coupling agent described in PTL 1, though the hydrolysis resistance of the silane coupling agent layer is improved, there were encountered a problem that the adhesiveness between the inorganic material and the resin is worsened; and a problem that an introduction rate of the silane coupling agent into the inorganic material surface is slow. In addition, according to the perfluoroalkylene group-containing silane coupling agent described in PTL 2, though the hydrolysis resistance of the silane coupling agent layer is improved, there was involved such a problem that a perfluorodiiodoalkane serving as a raw material for the production is expensive and hardly available.

Thus, an object of the present invention is to provide an organosilicon compound which when used as a silane coupling agent, is smoothly introduced into the inorganic material surface and is not only high in an effect for improving adhesiveness between an inorganic material and a resin but also excellent in hydrolysis resistance of a silane coupling agent layer.

As a result of extensive and intensive investigations made by the present inventors, it has been found that the aforementioned problem can be solved by an organosilicon compound having an alkyl group at a β-position of a silyl group, thereby leading to accomplishment of the present invention.

Specifically, the present invention provides the following [1] to [5].
[1] An organosilicon compound represented by the following general formula (I): 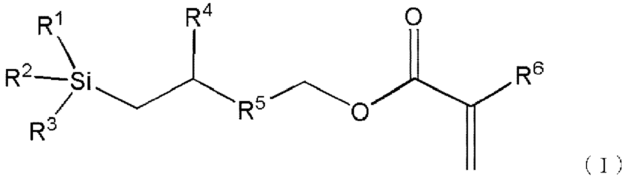 wherein R¹ to R³ each independently represent a chlorine atom, a methoxy group, or an ethoxy group; R⁴ represents an alkyl group having 1 to 10 carbon atoms, wherein the alkyl group is linear, branched, cyclic or a structure in which a linear and/or branched structure is bound with a cyclic structure; R⁵ represents an alkylene group having 1 to 10 carbon atoms, wherein the alkylene group is linear, branched, cyclic or a structure in which a linear and/or branched structure is bound with a cyclic structure; and R⁶ represents a hydrogen atom or a methyl group.
[2] The organosilicon compound according to claim 1, wherein R⁴ is a methyl group and R⁵ is a methylene group.
[3] A polymer compound having a structural unit derived from the organosilicon compound of [1] or [2].
[4] An inorganic material which is subjected to a surface treatment with the organosilicon compound of [1] or [2].
[5] A resin composition containing the inorganic material of [4].

By using the organosilicon compound of the present invention as a silane coupling agent, not only the silane coupling agent is smoothly introduced into the inorganic material surface, but also adhesiveness between an inorganic material and a resin and hydrolysis resistance of a silane coupling agent layer are improved.

The organosilicon compound represented by the general formula (I) of the present invention (hereinafter referred to as "compound (I)") is hereunder described.

R¹ to R³ each independently represent a chlorine atom, a methoxy group, or an ethoxy group. Of these, a methoxy group or an ethoxy group is preferred.

R⁴ represents an alkyl group having 1 to 10 carbon atoms. The alkyl group represented by R⁴ is not limited to be linear, and it may also be branched or cyclic or may be of a structure in which a linear and/or branched structure is bound with a cyclic structure.

Examples of the alkyl group having 1 to 10 carbon atoms represented by R⁴ include a methyl group, an ethyl group, a n-propyl group, an isopropyl group, a n-butyl group, an isobutyl group, a sec-butyl group, a tert-butyl group, a n-pentyl group, an isopentyl group, a neopentyl group, a n-hexyl group, a n-heptyl group, a n-octyl group, a 2-ethylhexyl group, a cyclopropyl group, a cyclobutyl group, a cyclopentyl group, a cyclohexyl group, a cycloheptanyl group, a cyclooctanyl group, and the like. Above all, an alkyl group having 1 to 6 carbon atoms is preferred; an alkyl group having 1 to 3 carbon atoms is more preferred; a methyl group or an ethyl group is still more preferred; and a methyl group is most preferred.

R⁵ represents an alkylene group having 1 to 10 carbon atoms. The alkylene group represented by R⁵ is not limited to a linear, and it may also be branched or cyclic or may be of a structure in which a linear and/or branched structure is bound with a cyclic structure.

Examples of the alkylene group having 1 to 10 carbon atoms represented by R⁵ include a methylene group, an ethane-1,1-diyl group, an ethane-1,2-diyl group, a propane-1,1-diyl group, a propane-1,2-diyl group, a propane-1,3-diyl group, a pentane-1,5-diyl group, a hexane-1,6-diyl group, a cyclohexane-1,4-diyl group, and the like. From the viewpoint of improving adhesiveness between the inorganic material and the resin, an alkyl group having 1 to 5 carbon atoms is preferred; an alkylene group having 1 to 3 carbon atoms is more preferred; a methylene group or an ethylene group is still more preferred; and a methylene group is most preferred.

In the compound (I), R⁵ plays a role as a spacer between a site related to dehydration condensation following binding with the inorganic material and a (meth)acryloyl group that is a site related to the reaction with the resin. Here, the "(meth)acryloyl group" expresses a methacryloyl group or an acryloyl group. In view of the matter that R⁵ is present as the spacer, the site related to dehydration condensation and the (meth)acryloyl group reacting with the resin keep an appropriate distance, whereby the dehydration condensation is smoothly achieved.

R⁶ represents a hydrogen atom or a methyl group.

In the compound (I), the carbon at the α-position of the silyl group has two hydrogen atoms, and the carbon at the β-position has at least one alkyl group. In the case where the compound (I) acts as a silane coupling agent, R¹ to R³ each become a hydroxy group through hydrolysis, and at least one of the hydroxy groups undergoes the dehydration condensation with the hydroxy group of the inorganic material surface.

On this occasion, when an alkyl group is present in the vicinity of the silyl group, the foregoing alkyl group becomes an obstacle against an approach of water to the dehydration condensation part, and the hydrolysis of the silane coupling agent layer is suppressed.

Meanwhile, such an alkyl group may also suppress the generation of hydroxy groups to be caused due to hydrolysis of R¹ to R³, and therefore, there is a concern that the smooth binding with the inorganic material surface is hindered.

According to the detailed investigations made by the present inventors, it has been proven that in the case where the carbon at the α-position of the silyl group has an alkyl group, an approach of water to R¹ to R³ is excessively hindered to suppress the hydrolysis of R¹ to R³, thereby hindering the smooth binding with the inorganic material surface. Meanwhile, it has been proven that the carbon at each of the α-position and the β-position of the silyl group has two hydrogen atoms, and in the case where the carbon at the γ-position has an alkyl group, an effect for hindering an approach of water or the like to the dehydration condensation part is small, and an effect for suppressing the hydrolysis of the silane coupling agent layer is small.

However, it has been found that in the case where the carbon at the α-position of the silyl group has two hydrogen atoms, and the carbon at the β-position of the silyl group has an alkyl group, the silane coupling agent layer can be smoothly introduced into the inorganic material surface without hindering the generation of hydroxy groups to be caused due to hydrolysis of R¹ to R³, an approach of water or the like to the dehydration condensation part after the formation of the silane coupling agent layer is appropriately hindered, and the hydrolysis is effectively suppressed.

As specific examples of the compound (I), the following compounds are exemplified, but it should be construed that the compound (I) is not limited thereto.

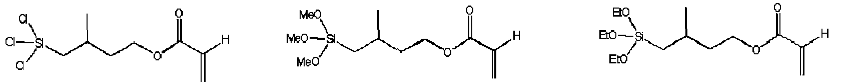

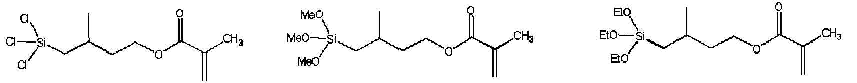

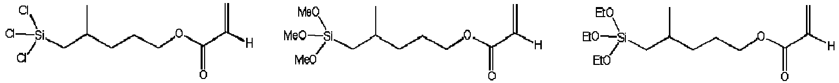

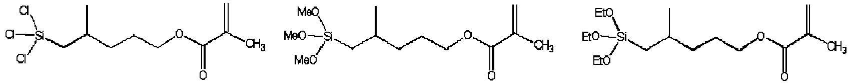

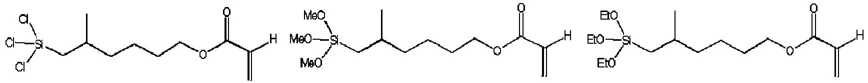

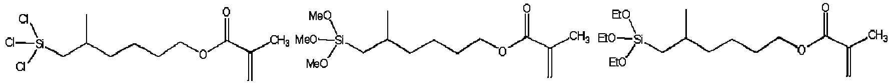

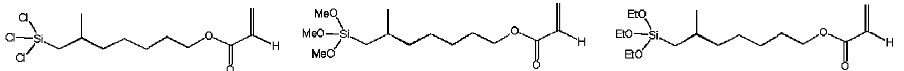

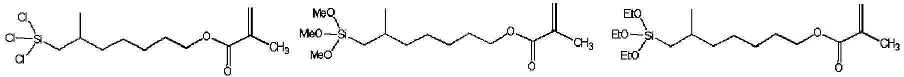

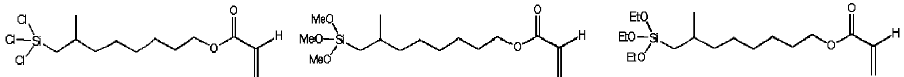

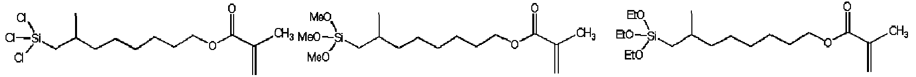

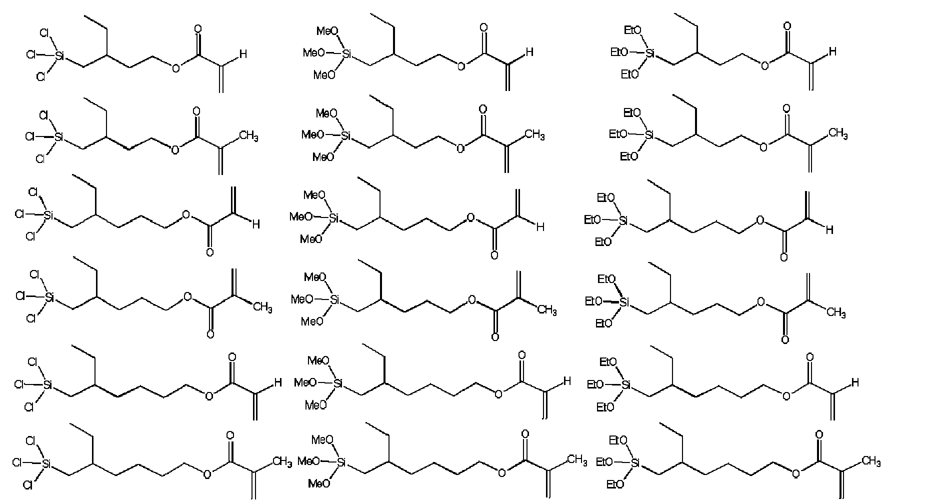

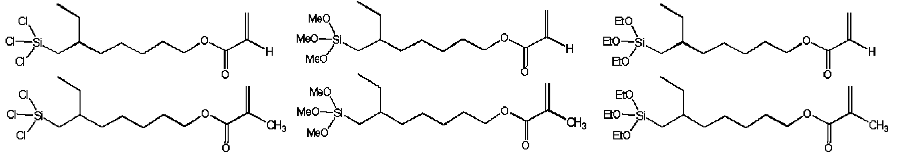

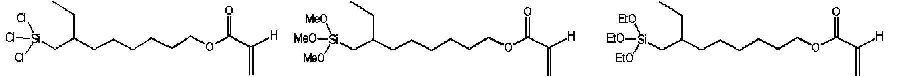

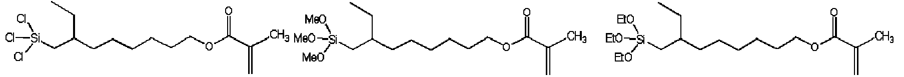

A production method of the compound (I) is not particularly limited, and compound (I) may be produced through a combination of known methods. Examples of the production method include a method in which an ester (IV) is first obtained from an alcohol (II) and (meth)acrylic acid (III) or a (meth)acrylic acid halide (V) and subsequently subjected to hydrosilylation with a hydrosilane (VI) (Production Method 1); a method in which the organosilicon compound (I) is produced from a halosilane compound (VII) and a (meth)acrylic acid alkali metal salt (VIII) (Production Method 2); and the like.

### (Production Method 1)

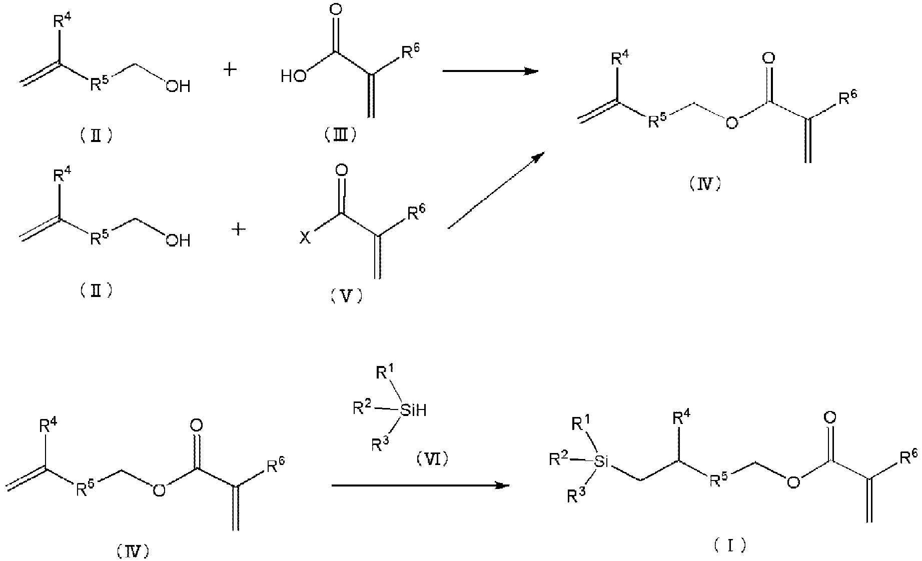

In the formulae, R¹ to R⁶ are the same as those defined above; and X represents a chlorine atom, a bromine atom, or an iodine atom.

### (Production Method 2)

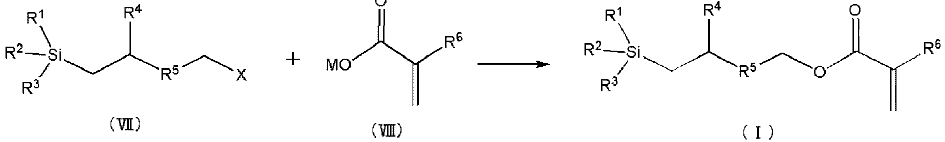

In the formulae, R¹ to R⁶ and X are the same as those defined above; and M represents a sodium atom or a potassium atom.

Production Method 1 is hereunder described in detail.

The step of obtaining the ester compound (IV) from the alcohol (II) and the (meth)acrylic acid (III) in the presence of an acid is referred to as "step 1-1a"; a step of obtaining the ester compound (IV) from the alcohol (II) and the (meth)acrylic acid halide (V) is referred to as "step 1-1b"; and a step of subjecting the ester compound (IV) obtained in the step 1-1a or step 1-1b to hydrosilylation with the hydrosilane (VI) in the presence of a platinum-based catalyst, to obtain the compound (I) is referred to as "step 1-2".

### (Step 1-1a)

Though the use amount of (meth)acrylic acid is not particularly limited, in general, it is preferably in a range of from 0.8 to 10 molar times relative to the alcohol (II) serving as the raw material, and from the viewpoints of yield and volume efficiency, it is more preferably 1 to 5 molar times.

The step 1-la may be carried out in the presence or absence of a solvent.

Such a solvent is not particularly limited so long as it does not adversely affect the reaction, and examples thereof include aromatic hydrocarbons, such as benzene, toluene, xylene, etc.; aliphatic hydrocarbons, such as hexane, heptane, octane, cyclohexane, methylcyclohexane, etc.; halogenated aromatic hydrocarbons, such as chlorobenzene, fluorobenzene, etc.; halogenated aliphatic hydrocarbons, such as dichloromethane, chloroform, 1,2-dichloroethane, etc.; ethers, such as diethyl ether, diisopropyl ether, tetrahydrofuran, etc.; and the like. These may be used alone, or may be used in combination of two or more thereof.

In the case of using the solvent, though its use amount is not particularly limited, in general, it is preferably in a range of from 0.5 to 20 times by mass relative to the alcohol (II) serving as the raw material, and from the viewpoint of volume efficiency, it is preferably in a range of from 1 to 5 times by mass.

In the step 1-1a, water is by-produced, and the reaction becomes in an equilibrium state with progress of the reaction. Accordingly, from the viewpoint of improving the yield of the target ester compound (IV), it is preferred to conduct the reaction while removing such water outside the reaction system. Though a method of removing water outside the reaction system is not particularly limited, for example, a method in which a solvent azeotropic with water is made coexistent, and the mixture is subjected to azeotrope with the solvent, thereby removing the water outside the reaction system is preferred. Examples of such a solvent include aromatic hydrocarbons, such as benzene, toluene, xylene, etc.; aliphatic hydrocarbons, such as hexane, heptane, octane, cyclohexane, methylcyclohexane, etc.; and the like. In addition, the by-produced water may also be removed by making a dehydrating agent which does not adversely affect the reaction, such as a molecular sieve, etc., coexistent in the reaction system.

Examples of the acid which is used in the step 1-la include mineral acids, such as sulfuric acid, hydrochloric acid, etc.; organic acids, such as p-toluenesulfonic acid, methanesulfonic acid, etc.; Lewis acids, such as aluminum triisopropoxide, titanium acetylacetonate, vanadium acetylacetonate, etc.; heteropolyacids, such as silicomolybdic acid, phosphotungstic acid, etc.; solid acids, such as silica-alumina, activated clay, an acidic ion exchange resin, etc.; and the like. Among these, from the viewpoint of allowing the reaction to proceed smoothly, it is preferred to use an organic acid or a mineral acid. Though the use amount of the acid is not particularly limited, in general, it is preferably in a range of from 0.0001 to 40% by mass relative to the alcohol (II) serving as the raw material, and from the viewpoints of reaction rate and suppression of side-reactions, it is more preferably in a range of from 0.001 to 20% by mass.

It is preferred to carry out the step 1-1a in the presence of a polymerization inhibitor. Examples of such a polymerization inhibitor include hydroquinones, such as hydroquinone, hydroquinone monomethyl ether, 2,5-di-t-butylhydroquinone, etc.; quinones, such as p-benzoquinone, etc.; naphthols, such as α-naphthol, β-naphthol, etc.; catechols, such as catechol, 3,5-di-t-butylcatechol, etc.; and the like. These may be used alone, or may be used in combination of two or more thereof. In the case of using the polymerization inhibitor, its use amount is preferably 5% by mass or less, more preferably 1% by mass or less, and still more preferably 0.5% by mass or less relative to the mass of the entire reaction mixture.

In general, a reaction temperature in the step 1-la is preferably in a range of from 20 to 200°C, and more preferably in a range of from 50 to 150°C. In addition, the reaction may be carried out even in an air atmosphere or even in an inert gas atmosphere of nitrogen, argon, or the like. Furthermore, the reaction may be conducted at atmospheric pressure, or may be conducted under reduced pressure.

After completion of the reaction, the target ester compound (IV) may be separated and acquired in a manner such that depending upon the acid used, the reaction mixture is suitably washed with an aqueous solution of a basic substance, such as a sodium hydroxide aqueous solution, a sodium hydrogen carbonate aqueous solution, etc., to remove the acid, or after removing the solid acid through filtration, decantation, or the like, the resultant is concentrated and then purified by a usual purification method, such as recrystallization, distillation, column chromatography, etc.

### (Step 1-lb)

In the (meth)acrylic acid halide (V) which is used in the step 1-1b, X is preferably a chlorine atom. Though the use amount of the (meth)acrylic acid halide (V) is not particularly limited, in general, it is preferably in a range of from 0.8 to 10 molar times relative to the alcohol (II) serving as the raw material, and from the viewpoints of yield and volume efficiency, it is more preferably 1 to 5 molar times.

The step 1-lb may be carried out in the presence or absence of a solvent. The solvent which may be used is not particularly limited so long as it does not adversely affect the reaction, and examples thereof include aromatic hydrocarbons, such as benzene, toluene, xylene, etc.; aliphatic hydrocarbons, such as hexane, heptane, octane, cyclohexane, methylcyclohexane, etc.; ethers, such as diethyl ether, diisopropyl ether, tetrahydrofuran, etc.; halogenated aromatic hydrocarbons, such as chlorobenzene, fluorobenzene, etc.; halogenated aliphatic hydrocarbons, such as dichloromethane, chloroform, 1,2-dichloroethane, etc.; nitrogen-containing compounds, such as N,N-dimethylformamide, N,N-dimethylacetamide, N-methylpyrrolidone, acetonitrile, propionitrile, pyridine, 4-dimethylaminopyridine, quinoline, triethylamine, trimethylamine, etc.; sulfur-containing compounds, such as dimethyl sulfoxide, sulfolane, etc.; and the like. These may be used alone, or may be used in combination of two or more thereof. In the case of using the solvent, though its use amount is not particularly limited, in general, it is preferably 0.5 to 200 times by mass relative to the alcohol (II) serving as the raw material, and from the viewpoint of volume efficiency, it is more preferably 1 to 50 times by mass.

The step 1-1b may be carried out in the presence or absence of a basic compound. As the basic compound, trimethylamine, triethylamine, tri-n-propylamine, triisopropylamine, diisopropylethylamine, pyridine, 2-methylpyridine, 3-methylpyridine, 4-methylpyridiene, 4-dimethylaminopyridine, 2,6-dimethylpyridine, 2,4,6-trimethylpyridine, quinoline, isoquinoline, 1,8-diazabicyclo[4.3.0]nonene-5, 1,8-diazabicyclo[5.4.0]undecene-7, lithium carbonate, sodium carbonate, potassium carbonate, sodium hydrogen carbonate, sodium hydroxide, potassium hydroxide, lithium hydroxide, tetramethylammonium hydroxide, tetrabutylammonium hydroxide, and so on may be used. Among these, triethylamine, pyridine, and 4-dimethylaminopyridine are preferred. The use amount of the basic compound is not particularly limited, and it is preferably 0.8 to 20 molar times, and more preferably 1 to 10 molar times relative to the (meth)acrylic acid halide (V). These basic compounds may be used either alone or in admixture of two or more thereof. In addition, such a basic compound may be used as the solvent.

It is preferred that the step 1-1b is carried out in the presence of a polymerization inhibitor. Examples of such a polymerization inhibitor include hydroquinones, such as hydroquinone, hydroquinone monomethyl ether, 2,5-di-t-butylhydroquinone, etc.; quinones, such as p-benzoquinone, etc.; naphthols, such as α-naphthol, β-naphthol, etc.; catechols, such as catechol, 3,5-di-t-butylcatechol, etc.; amines, such as p-hydroxydiphenylamine, phenothiazine, diethylhydroxylamine, etc.; N-oxyls, such as 2,2,6,6-tetramethylpiperidine-N-oxyl, 4-hydroxy-2,2,6,6-tetramethylpiperidine-N-oxyl, etc.; and the like. These may be used alone, or may be used in combination of two or more thereof. In the case of using the polymerization inhibitor, its use amount is preferably 5% by mass or less, more preferably 1% by mass or less, and still more preferably 0.5% by mass or less relative to the mass of the entire reaction mixture.

In general, a reaction temperature is preferably in a range of from -40 to 100°C, and more preferably in a range of from -20 to 60°C.

After completion of the reaction, the target ester compound (IV) may be separated and acquired in a manner such that the reaction mixture is subjected to washing with water or the like, the resulting organic layer is concentrated, and the resultant is then purified by a usual purification method, such as recrystallization, distillation, column chromatography, etc.

### (Step 1-2)

Examples of the hydrosilane (VI) which is used in the step 1-2 include trichlorosilane, trimethoxysilane, triethoxysilane, and the like.

As the platinum-based catalyst which is used in the step 1-2, a platinum chloride-based catalyst may be preferably used. Specifically, examples thereof include hexachloroplatinic(IV) acid (H₂PtCl₆), a platinum chloride·unsaturated ketone complex, a platinum chloride·β-diketone complex, a platinum chloride olefin complex, and the like. Though the use amount of the platinum-based catalyst is not particularly limited, it is preferably 10⁻⁷ to 10⁻³ mol, and more preferably 10⁻⁶ to 10⁻³ mol per mol of the ester compound (IV) serving as the raw material.

The step 1-2 may be carried out in the presence or absence of a solvent. The solvent which may be used is not particularly limited so long as it does not adversely affect the reaction, and examples thereof include alcohols, such as methanol, ethanol, n-propanol, isopropanol, etc.; aromatic hydrocarbons, such as benzene, toluene, xylene, etc.; aliphatic hydrocarbons, such as hexane, heptane, octane, cyclohexane, methylcyclohexane, etc.; ethers, such as diethyl ether, diisopropyl ether, tetrahydrofuran, etc.; halogenated aromatic hydrocarbons, such as chlorobenzene, fluorobenzene, etc.; halogenated aliphatic hydrocarbons, such as dichloromethane, chloroform, 1,2-dichloroethane, etc.; and the like. These may be used alone, or may be used in combination of two or more thereof. In the case of using the solvent, though its use amount is not particularly limited, in general, it is preferably 0.5 to 100 times by mass relative to the ester compound (IV) serving as the raw material, and from the viewpoint of volume efficiency, it is more preferably 1 to 10 times by mass.

In general, a reaction temperature is preferably in a range of from -10 to 100°C, and more preferably in a range of from 20 to 80°C. A reaction time is, in general, 0.5 hours to 48 hours.

In the compound (I), in the case where it is contemplated to obtain a compound where R¹ to R³ are each a methoxy group or an ethoxy group, the compound may be acquired by a method of directly undergoing the synthesis using trimethoxysilane or triethoxysilane, or a method in which after reacting with trichlorosilane, the desired alkoxy body is obtained in methanol or ethanol. In the case of going through a trichloro body, for the purpose of capturing hydrogen chloride which is generated on the occasion of alkoxylation, it is possible to make, as a base, triethylamine, pyridine, sodium carbonate, potassium carbonate, sodium methoxide, sodium ethoxide, or the like coexistent. Though the use amount of the base is not particularly limited, in general, it is preferably 0.8 to 20 molar times, and more preferably 1.0 to 10 molar times relative to the hydrosilane (VI).

Though the reaction may be carried out at atmospheric pressure or under elevated pressure, in general, it is carried out at atmospheric pressure.

The compound (I) obtained after completion of the reaction may be isolated by a method which is usually adopted in isolation/purification of an organic compound. For example, after filtering the reaction mixture, the resultant is concentrated and then purified by distillation under reduced pressure or the like, whereby the target organosilicon compound (I) may be obtained. In addition, the reaction mixture may also be used as the silane coupling agent through direct concentration.

The thus produced compound (I) has a function as the silane coupling agent, and for the purpose of surface modification of an inorganic material, improvement of adhesion of an adhesive, improvement of durability of a coating film, crosslinking of an organic polymer, or the like, the compound (I) may be widely used for an adhesive, a primer, a sealant, a sealing material, a paint, a coating material, a glass fiber-reinforced resin, an inorganic filler-compounded resin, a composite reinforced resin, a printing ink, an elastomer material, a thermoplastic resin material, a composite material, an electrical insulator, and so on.

### [Polymer Compound]

The polymer compound of the present invention has a structural unit derived from the compound (I).

Such a polymer compound is obtained by, for example, polymerizing the compound (I) alone, or copolymerizing the compound (I) and other monomer.

The aforementioned other monomer is not limited so long as it is copolymerizable with the compound (I), and examples thereof include olefins, such as ethylene, propylene, etc.; acrylic acid esters, such as methyl acrylate, ethyl acrylate, n-propyl acrylate, isopropyl acrylate, n-butyl acrylate, sec-butyl acrylate, tert-butyl acrylate, cyclohexyl acrylate, etc.; methacrylic acid esters, such as methyl methacrylate, ethyl methacrylate, n-propyl methacrylate, isopropyl methacrylate, n-butyl methacrylate, sec-butyl methacrylate, tert-butyl methacrylate, cyclohexyl methacrylate, etc.; vinyl aromatic compounds, such as styrene, α-methylstyrene, o-methylstyrene, m-methylstyrene, p-methylstyrene, vinyltoluene, p-tert-butylstyrene, 2,4-dimethylstyrene, 2,4,6-trimethylstyrene, p-methoxystyrene, p-tert-butoxystyrene, etc.; conjugated dienes, such as butadiene, isoprene, 2,3-dimethyl-1,3-butadiene, 1,3-pentadiene, 1,3-hexadiene, 1,3-cyclohexadiene, etc.; and the like.

The polymer compound of the present invention has a structural unit derived from the compound (I), and therefore, it has high adhesiveness to the inorganic material surface and is useful as a paint, a coating agent, or the like.

### [Inorganic Material and Resin Composition]

The resin composition of the present invention contains an inorganic material (typically an inorganic filling material) which is subjected to a surface treatment with the compound (I). In the present specification, the term "resin" is a concept inclusive of an elastomer, too.

The inorganic material to be subjected to a surface treatment with the compound (I) is not particularly limited so long as it is composed of an inorganic material which generally reacts with a silanol group to form a bond, and a shape of the inorganic material is not particularly limited, too. Examples of such an inorganic material include fillers, such as silicon, titanium, zirconium, magnesium, aluminum, indium, or tin, or a single or composite oxide thereof; glass fillers, such as a glass fiber, a glass cloth, a glass tape, a glass mat, a glass paper, etc.; silica-based filling materials; mineral-based filling materials, such as clay, mica, talc, wollastonite, etc.; metal base materials, such as iron, aluminum, etc.; and the like.

The surface treatment method of the inorganic material is not particularly limited. Examples thereof include a method in which the inorganic material is added to the resin, followed by adding thereto and mixing therewith a stock solution of the compound (I) or a solution of the compound (I) diluted with an organic solvent, water, or the like; a method in which prior to adding the inorganic material to the resin, the inorganic material is previously treated with the compound (I) by a dry method or a wet method; a primer method in which the compound (I) diluted with an organic solvent, water, or the like is coated directly on the inorganic material; and the like.

In the surface treatment of the inorganic material, it is preferred that a drying treatment with heat is followed. By conducting the drying treatment with heat, dehydration condensation between the hydroxy group of the compound (I) and the hydroxy group of the inorganic material surface proceeds, whereby firm binding may be formed.

A temperature in the drying treatment is typically 60 to 180°C, and preferably 80 to 150°C. In addition, a drying time is preferably 5 minutes to 4 hours.

Examples of the resin constituting the resin composition of the present invention include an unsaturated polyester, a silicone resin, a melamine resin, polystyrene, polyethylene, polypropylene, a polyether, an acrylic resin, diallyl phthalate, a butyl rubber, and the like.

These resins may be used alone, or may be used in combination of two or more thereof.

The resin composition of the present invention may contain, in addition to the aforementioned surface-treated inorganic material and resin, other additive, such as a solvent, a surfactant, an antiseptic, a discoloration inhibitor, an antioxidant, a flame retardant, a light stabilizer, a non-surface-treated inorganic filling material, etc., if desired within a range where the gist of the present invention is not impaired.

The resin composition of the present invention may be prepared by mixing the aforementioned respective constituent components according to a known method. Examples thereof include a method of dry blending the resin with other component(s); a method of melt kneading the respective constituent components using an extruder; and the like.

By molding the resin composition of the present invention, a molded body which is not only high in adhesiveness between the inorganic material and the resin but also excellent in hydrolysis resistance of the silane coupling agent layer.

### Examples

The present invention is hereunder specifically described by reference to Examples, but it should be construed that the present invention is not limited to these Examples.

### <Example 1>

### (Step 1-1b: Synthesis of 3-methyl-3-butene methacrylate)

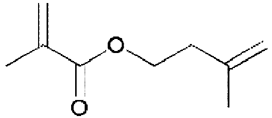

A 200-mL reactor equipped with a stirrer, a thermometer, and a dropping funnel was charged with 5.0 g (58.1 mmol) of 3-methyl-3-buten-1-ol, 40 mL of dichloromethane, and 17.6 g (174 mmol) of triethylamine in a nitrogen gas stream and cooled to an inner temperature of 5°C or lower while stirring. 12.2 g (117 mmol) of methacrylic acid chloride was added dropwise while holding the inner temperature of 5°C or lower, and after completion of the dropwise addition, the temperature was raised to 25°C. After stirring at the inner temperature of 25°C for 4 hours and then confirming completion of the reaction, the resultant was cooled to the inner temperature of 5°C or lower, 50 g of saturated sodium hydrogen carbonate was added, and after stirring, an organic phase was separated. The organic phase was successively washed with 50 g of a saturated sodium hydrogen carbonate aqueous solution and subsequently with 50 g of a saturated saline solution, and then dried over sodium sulfate, followed by filtration. To the filtrate, 5 mg of hydroquinone monomethyl ether was added, followed by concentration under reduced pressure. The concentrate was purified by silica gel chromatography, thereby obtaining 4.7 g (30.8 mmol, yield: 53%) of 3-methyl-3-butene methacrylate.
¹H-NMR (400 MHz, CDCl₃, TMS) δ: 6.10 (s,1H), 5.55-5.54 (m, 1H), 4.81 (s, 1H), 4.76 (s, 1H), 4.26 (t, J=6.8Hz, 2H), 2.39 (t, J=6.8Hz, 2H), 1.94 (s, 3H), 1.78 (s, 3H)

### (Step 1-2: Synthesis of 4-methacryloxy-2-methylbutyltrimethoxysilane)

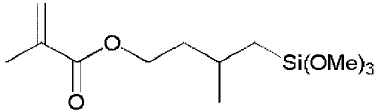

A 25-mL reactor equipped with a stirrer, a thermometer, and a dropping funnel was charged with 1.0 g (6.48 mmol) of 3-methyl-3-butene methacrylate in a nitrogen gas stream, 0.3 mL of a solution of 1.8 mg (3.48 µmol) of H₂PtCl₆·6H₂O in tetrahydrofuran was added, and 1.32 g (9.74 mmol) of trichlorosilane was then added dropwise, followed by stirring at 25°C for 20 hours. A separately prepared 50-mL reactor equipped with a stirrer, a thermometer, and a dropping funnel was charged with 5 mL of methanol and 8 mL of triethylamine, and the foregoing reaction liquid was added dropwise at 5°C or lower while stirring. After the dropwise addition, stirring was continued at 25°C for 2 hours. The reaction liquid was concentrated, 10 mL of diisopropyl ether was added, and a precipitated salt was filtered. The filtrate was concentrated to obtain 1.10 g (3.95 mmol, yield: 61%) of 4-methacryloxy-2-methylbutyltrimethoxysilane.
¹H-NMR (400 MHz, CDCl₃, TMS) δ: 6.10 (s, 1H), 5.55-5.54 (m, 1H), 4.18 (t, J=7.2Hz, 2H), 3.56 (s, 9H), 1.94 (s, 3H), 1.94-1.82 (m, 1H), 1.78-1.52 (m, 2H), 1.02 (d, J=6.4Hz, 3H), 0.78 (dd, J=15.2, 5.6Hz, 1H), 0.58 (dd, J=15.2, 8.4Hz, 1H)

### <Example 2>

### (Step 1-1b: Synthesis of 3-methyl-3-butene acrylate)

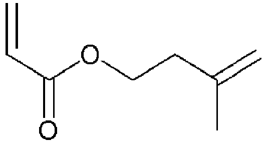

A 200-mL reactor equipped with a stirrer, a thermometer, and a dropping funnel was charged with 5.0 g (58.1 mmol) of 3-methyl-3-buten-1-ol, 40 mL of dichloromethane, and 17.6 g (174 mmol) of triethylamine in a nitrogen gas stream and cooled to an inner temperature of 5°C or lower while stirring. 8.0 g (88.4 mmol) of acrylic acid chloride was added dropwise while holding the inner temperature of 5°C or lower, and after completion of the dropwise addition, the temperature was raised to 25°C. After stirring at the inner temperature of 25°C for 4 hours and then confirming completion of the reaction, the resultant was cooled to the inner temperature of 5°C or lower, 50 g of saturated sodium hydrogen carbonate was added, and after stirring, an organic phase was separated. The organic phase was successively washed with 50 g of a saturated sodium hydrogen carbonate aqueous solution and subsequently with 50 g of a saturated saline solution, and then dried over sodium sulfate, followed by filtration. To the filtrate, 5 mg of hydroquinone monomethyl ether was added, followed by concentration under reduced pressure. The concentrate was purified by silica gel chromatography, thereby obtaining 5.6 g (40.0 mmol, yield: 69%) of 3-methyl-3-butene acrylate.
¹H-NMR (400 MHz, CDCl₃, TMS) δ: 6.40 (dd, J=17.2, 1.6Hz, 1H), 6.12 (dd, J=17.2, 10.4Hz, 1H), 5.82 (dd, J=10.4, 1.6Hz, 1H), 4.82 (s, 1H), 4.76 (s, 1H), 4.28 (t, J=6.8Hz, 2H), 2.39 (t, J=6.8Hz, 1H), 1.77 (s, 3H)

### (Step 1-2: Synthesis of 4-acryloxy-2-methylbutyltrimethoxysilane)

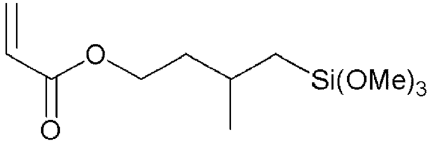

A 25-mL reactor equipped with a stirrer, a thermometer, and a dropping funnel was charged with 1.0 g (7.13 mmol) of 3-methyl-3-butene acrylate in a nitrogen gas stream, 0.3 mL of a solution of 1.8 mg (3.48 µmol) of H₂PtCl₆·6H₂O in tetrahydrofuran was added, and 1.45 g (10.7 mmol) of trichlorosilane was then added dropwise, followed by stirring at 25°C for 20 hours. A separately prepared 50-mL reactor equipped with a stirrer, a thermometer, and a dropping funnel was charged with 5 mL of methanol and 8 mL of triethylamine, and the foregoing reaction liquid was added dropwise at 5°C or lower while stirring. After the dropwise addition, stirring was continued at 25°C for 2 hours. The reaction liquid was concentrated, 10 mL of diisopropyl ether was added, and a precipitated salt was filtered. The filtrate was concentrated to obtain 1.35 g (4.21 mmol, yield: 59%) of 4-acryloxy-2-methylbutyltrimethoxysilane.
¹H-NMR (400 MHz, CDCl₃, TMS) δ: 6.54 (dd, J=17.2, 1.6Hz, 1H), 6.27 (dd, J=17.2, 10.4Hz, 1H), 5.95 (dd, J=10.4, 1.6Hz, 1H), 4.26 (t, J=6.8Hz, 2H), 3.58 (s, 9H), 1.95-1.81 (m, 1H), 1.76-1.58 (m, 2H), 1.05 (d, 3H), 0.96-0.84 (m, 1H), 0.78-0.65 (m, 1H)

### <Example 3>

Methyl methacrylate, 4-methacryloxy-2-methylbutyltrimethoxysilane obtained in Example 1, and 2,2'-azobis(2-methylbutyronitrile) were dissolved in a proportion of 50/50/0.2 (molar ratio) in methyl isobutyl ketone such that the reaction product occupied in an amount of 25% by mass of the whole, and after nitrogen bubbling, the solution was allowed to react at 70°C for 8 hours. The mixture after the reaction was subjected to mesh filtration, thereby obtaining a copolymer.

Subsequently, 100 parts by mass of toluene was added to 100 parts by mass (expressed in terms of a solid content) of the obtained copolymer, to prepare a dilute solution, to which was then added, as an organometallic catalyst, tetrabutyl orthotitanate in an amount of 5 parts by mass relative to the solid content of the copolymer, and the resultant was uniformly mixed and degassed using a stirrer, to obtain a coating agent composition. The coating agent composition was coated on a glass plate by using a bar coater (No. 14) at 25°C in air at a humidity of 50%, and then dried at room temperature, followed by carrying out various evaluations as described later.

### <Comparative Example 1>

The production of a copolymer and coating were conducted in the same manner as in Example 3, except that 3-methacryloxy-propyltrimethoxysilane was used in place of the 4-methacryloxy-2-methylbutyltrimethoxysilane, followed by carrying out various evaluations as described later.

### <Comparative Example 2>

The production of a copolymer and coating were conducted in the same manner as in Example 3, except that 8-methacryloxy-octyltrimethoxysilane was used in place of the 4-methacryloxy-2-methylbutyltrimethoxysilane, followed by carrying out various evaluations as described later.

### [Various Evaluations]

### (Low-Temperature Curability)

On the occasion of coating the coating agent composition on a glass plate and then rubbing the surface of the coating film with absorbent cotton having acetone impregnated therein, a time required until a state where separation or flaw was not confirmed through visual inspection was confirmed. The results are shown in Table 1.

### (Pencil Hardness)

One week after coating the coating agent composition on a glass plate, the pencil hardness was measured by a method in conformity with the pencil scratch test according to JIS K5600-5-4. The results are shown in Table 1.

### (Alkali Resistance)

The coating agent composition was coated on a glass plate and allowed to stand at room temperature for one week; thereafter, a drop of a 10% by mass sodium hydroxide aqueous solution was poured in two places in total; after allowing to stand at room temperature for one hour, the water drop was washed away; the excessive water was wiped off; and dissolution of the film and traces of the water drop were confirmed through visual inspection. The case where any traces of the water droplet were not observed at all was evaluated to be "○" in the alkali resistance. The case where dissolution or separation of the coating was confirmed was evaluated to be "×". The results are shown in Table 1.

**Table 1**

| | Example 3 | Comparative Example 1 | Comparative Example 2 |
|---|---|---|---|
| Low-temperature curability | 48 hours | 15 hours | >168 hours |
| Pencil hardness | 3H | 3H | 6B or less |
| Alkali resistance | ○ | × | ○ |

It is noted from the results of Table 1 that as compared with the case of using a long-chain silane coupling agent as in 8-methacryloxy-octyltrimethoxysilane, the polymer compound having a structural unit derived from the organosilicon compound of the present invention is smooth in introduction into the inorganic material surface, excellent in adhesiveness to the inorganic material surface, and excellent in hydrolysis resistance under a basic condition.

### <Example 4>

A quartz plate was dipped in concentrated hydrochloric acid, a deposit on the surface was removed, and the quartz plate was then washed with distilled water, followed by drying. The aforementioned quartz plate was dipped in an ethanol/water (95/5, v/v) solution of 2.0 mol/L of 4-methacryloxy-2-methylbutyltrimethoxysilane at 25°C for 2 hours and then subjected to a heat drying treatment at 110°C for 3 hours. Using this test piece, a contact angle against water was measured with FTA-188 (manufactured by First Ten Angstroms). The results are shown in Table 2.

### <Comparative Example 3>

A contact angle was measured in the same manner as in Example 4, except that 3-methacryloxy-propyltrimethoxysilane was used in place of the 4-methacryloxy-2-methylbutyltrimethoxysilane. The results are shown in Table 2.

### <Comparative Example 4>

A contact angle was measured in the same manner as in Example 4, except that 8-methacryloxy-octyltrimethoxysilane was used in place of the 4-methacryloxy-2-methylbutyltrimethoxysilane. The results are shown in Table 2.

**Table 2**

| | Example 4 | Comparative Example 3 | Comparative Example 4 |
|---|---|---|---|
| Contact angle | 73(±1)° | 65(±2)° | 66(±2)° |

There were brought such results that in the case of using the organosilicon compound of the present invention, the contact angle is larger than that in the case of using 8-methacryloxy-octyltrimethoxysilane that may be considered to be higher in hydrophobicity. The matter that the organosilicon compound of the present invention is high in a surface introduction rate on the occasion of treatment for the same time (namely, excellent in surface introduction speed) may be considered as one cause.

The organosilicon compound of the present invention is useful as a silane coupling agent for the purpose of improving adhesiveness between the resin and the inorganic material.

## Claims

1. An organosilicon compound represented by the following general formula (I): 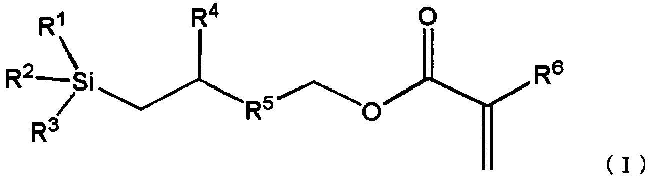 wherein R¹ to R³ each independently represent a chlorine atom, a methoxy group, or an ethoxy group; R⁴ represents an alkyl group having 1 to 10 carbon atoms, wherein the alkyl group is linear, branched, cyclic or a structure in which a linear and/or branched structure is bound with a cyclic structure; R⁵ represents an alkylene group having 1 to 10 carbon atoms, wherein the alkylene group is linear, branched, cyclic or a structure in which a linear and/or branched structure is bound with a cyclic structure; and R⁶ represents a hydrogen atom or a methyl group.

2. The organosilicon compound according to claim 1, wherein R⁴ is a methyl group and R⁵ is a methylene group.

3. A polymer compound comprising a structural unit derived from the organosilicon compound according to claim 1 or 2.

4. An inorganic material which is subjected to a surface treatment with the organosilicon compound according to claim 1 or 2.

5. A resin composition comprising the inorganic material according to claim 4.

## Patentansprüche

1. Organosiliciumverbindung, dargestellt durch die nachstehende allgemeine Formel (I): 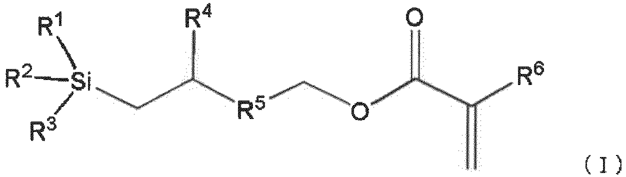 wobei R¹ bis R³ jeweils unabhängig voneinander ein Chloratom, eine Methoxygruppe oder eine Ethoxygruppe darstellen; R⁴ eine Alkylgruppe mit 1 bis 10 Kohlenstoffatomen darstellt, wobei die Alkylgruppe linear, verzweigt, cyclisch oder eine Struktur ist, in der eine lineare und/oder verzweigte Struktur mit einer cyclischen Struktur verbunden ist; R⁵ eine Alkylengruppe mit 1 bis 10 Kohlenstoffatomen darstellt, wobei die Alkylengruppe linear, verzweigt, cyclisch oder eine Struktur ist, in der eine lineare und/oder verzweigte Struktur mit einer cyclischen Struktur verbunden ist; und R⁶ ein Wasserstoffatom oder eine Methylgruppe darstellt.

2. Organosiliciumverbindung nach Anspruch 1, wobei R⁴ eine Methylgruppe ist und R⁵ eine Methylengruppe ist.

3. Polymerverbindung, umfassend eine Struktureinheit, abgeleitet von der Organosiliciumverbindung nach Anspruch 1 oder 2.

4. Anorganisches Material, das einer Oberflächenbehandlung mit der Organosiliciumverbindung nach Anspruch 1 oder 2 unterzogen ist.

5. Harzzusammensetzung, umfassend das anorganische Material nach Anspruch 4.

## Revendications

1. Composé d'organosilicium représenté par la formule générale (I) suivante : 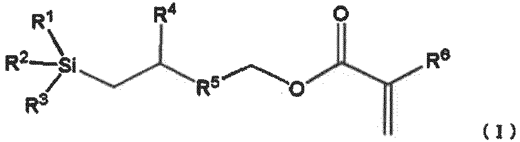 dans lequel R¹ à R³ représentent chacun indépendamment un atome de chlore, un groupe méthoxy ou un groupe éthoxy ; R⁴ représente un groupe alkyle ayant de 1 à 10 atomes de carbone, dans lequel le groupe alkyle est linéaire, ramifié, cyclique ou une structure dans laquelle une structure linéaire et/ou ramifiée est liée à une structure cyclique ; R⁵ représente un groupe alkylène ayant de 1 à 10 atomes de carbone, dans lequel le groupe alkylène est linéaire, ramifié, cyclique ou une structure dans laquelle une structure linéaire et/ou ramifiée est liée à une structure cyclique ; et R⁶ représente un atome d'hydrogène ou un groupe méthyle.

2. Composé d'organosilicium selon la revendication 1, dans lequel R⁴ est un groupe méthyle et R⁵ est un groupe méthylène.

3. Composé polymère comprenant une unité structurale dérivée du composé d'organosilicium selon la revendication 1 ou 2.

4. Matériau inorganique qui est soumis à un traitement de surface avec le composé d'organosilicium selon la revendication 1 ou 2.

5. Composition de résine comprenant le matériau inorganique selon la revendication 4.
